# EUROPÄISCHE PATENTSCHRIFT

(11) **EP 1 940 890 B1**
(45) Veröffentlichungstag und Bekanntmachung des Hinweises auf die Patenterteilung: **12.01.2011**
(21) Anmeldenummer: 06807243.8
(22) Anmeldetag: 13.10.2006
(51) Int. Cl.: C08F 10/10, C08F 4/14

(54) **VERFAHREN ZUR HERSTELLUNG VON POLYISOBUTEN**
METHOD FOR PRODUCING A POLYISOBUTENE
PROCEDE POUR PRODUIRE DU POLYISOBUTYLENE

(30) Priorität: 14.10.2005 DE 102005049236
(43) Veröffentlichungstag der Anmeldung: 09.07.2008
(73) Patentinhaber: BASF SE, 67056 Ludwigshafen (DE)
(72) Erfinder: RATH, Hans Peter, 67269 Grünstadt (DE); MACH, Helmut, 69115 Heidelberg (DE); WETTLING, Thomas, 67117 Limburgerhof (DE)
(86) Internationale Anmeldenummer: PCT/EP2006/067379
(87) Internationale Veröffentlichungsnummer: WO 2007/042565

(56) Entgegenhaltungen:
- EP-A- 0 363 706
- WO-A-99/29744
- DE-A1- 10 361 638
- DATABASE CA [Online] CHEMICAL ABSTRACTS SERVICE, COLUMBUS, OHIO, US; VINNIK, M. I. ET AL: "Catalytic properties of complex compounds of boron fluoride" XP002410342 gefunden im STN Database accession no. 1961:62956 & PROBLEMY KINETIKI I KATALIZA, AKAD. NAUK S.S.S.R. , (NO. 10), 285-90, 1960,

## Beschreibung

Die Erfindung betrifft ein Verfahren zur Herstellung von Polyisobuten unter Verwendung eines cyclischen Ethers.

Die Herstellung von Polyisobuten erfolgt durch Polymerisation von Isobuten mit BF₃-haltigen Katalysatoren. Insbesondere bei der Herstellung von nieder- und mittelmolekularem Polyisobuten kommen Komplexe von BF₃ mit Verbindungen, die aktive Wasserstoffatome aufweisen, z. B. Alkohole, zur Anwendung. Bei Verwendung derartiger Komplexe kommt es zu Nebenreaktionen unter Bildung tertiärer Fluoride, wie tert.-Butylfluorid, und Fluorwasserstoff. Wenn die Polymerisation in Gegenwart von n-Butenen (Einsatz von Raffinat I oder C₄-Schnitten aus FCC) durchgeführt wird, kommt es auch zur Bildung von sekundären organischen Fluoriden. Die Fluorid-Nebenprodukte verunreinigen einerseits das Polyisobuten. Andererseits besitzen sie unterschiedliche Thermostabilität und setzen, je nach Stabilität, bei der Entgasung, Lagerung oder späteren Funktionalisierung des Polyisobutens zusätzlich Fluorwasserstoff frei. Der Fluorwasserstoff führt, insbesondere in Gegenwart von Wasser, zu starker Korrosion an den verwendeten Maschinen und Apparaten. Man ist daher gezwungen, Maschinen und Apparate aus teuren, korrosionsbeständigen Materialien zu verwenden.

Die EP-A 1 081 165 beschreibt eine Möglichkeit zur Verringerung des Halogengehalts von Polyisobuten, indem man es unter Bedingungen mit Aluminiumoxid behandelt, die eine Doppelbindungsisomerisierung weitgehend verhindern. Die Behandlung erfolgt z. B. an einem Aluminiumoxid-Festbett. Es wird postuliert, dass an der Aluminiumoxidoberfläche eine Spaltung der halogenierten Polyisobutenmoleküle unter Rückbildung von Vinylidengruppen erfolgt. Da diese Reaktion thermodynamisch nicht begünstigt ist, wird sie vermutlich nur in geringem Umfang stattfinden und die anfänglich beobachteten, niedrigen Fluoridwerte sind vermutlich eher auf eine Adsorption von freiem Fluorid am Aluminiumoxid zurückzuführen.

Die WO 2005/066220 beschreibt ein Verfahren zur Herstellung von Polyisobuten, bei dem man Isobuten in Gegenwart einer halogenhaltigen Lewis-Säure als Katalysator polymerisiert, den Katalysator abtrennt und/oder deaktiviert und das erhaltenen Polyisobuten mit einem Zeolith einer durchschnittlichen Porengröße in Kontakt bringt.

Ein weiteres Verfahren zur Herstellung von fluoridarmem Polyisobuten ist in der WO 2005/066222 beschrieben, bei dem man die Polymerisation von Isobuten mit einem BF₃-haltigen Katalysator in Gegenwart eines Moderators durchführt, der ausgewählt ist unter Cyanwasserstoff, Cyaniden und Nitrilen.

Aus der WO 99/29744 beschreibt den Einsatz von Epoxiden als Initiatoren in der lebenden kationischen Polymerisation von Olefinen wie Isobuten oder Vinylaromaten wie Styrol. Auf diese Weise werden OH-terminierte Polymere erhalten.

Der vorliegenden Erfindung liegt die Aufgabe zugrunde, ein Verfahren zur Herstellung von Polyisobuten zur Verfügung zu stellen, bei dem die Bildung der Fluorid-Nebenprodukte, vorzugsweise bereits im Reaktor, vermieden oder zumindest reduziert werden kann. Das Verfahren sollte insbesondere zu Polyisobutenen mit einem hohen Gehalt an Olefinischen Endgruppen führen.

Überraschenderweise wurde nun gefunden, dass diese Aufgabe gelöst wird, wenn man die Polymerisation von Isobuten unter Verwendung von Bortrifluorid-haltigen Komplex-Katalysatoren zumindest zeitweise in Anwesenheit eines cyclischen Ethers durchführt.

Die Erfindung betrifft somit ein Verfahren zur Herstellung von Polyisobuten mit einem zahlenmittlerem Molekulargewicht Mₙ von 400 bis 50000, insbesondere 500 bis 10000 durch Polymerisation von Isobuten in Anwesenheit eines BF₃-haltigen Komplex-Katalysators, wobei man die Polymerisation zumindest zeitweise in Anwesenheit von einem oder mehreren cyclischen Ethern durchführt.

Bevorzugt ist das erfindungsgemäße Verfahren zur Herstellung von Polyisobuten mit einem Gehalt an Methylidengruppen von mehr als 50 Mol-% und insbesondere von wenigstens 60 Mol-% geeignet. Unter Methylidengruppen werden im Sinne der vorliegenden Anmeldung solche Doppelbindungen verstanden, deren Lage im Polyisobutenmakromolekül durch die allgemeine Formel 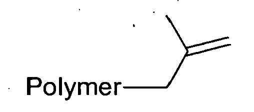 beschrieben wird, wobei "Polymer" für den um eine Isobuteneinheit verkürzten Polyisobutenrest steht. Die Methylidengruppen zeigen die höchste Reaktivität, wohingegen die weiter im Inneren der Makromoleküle liegenden Doppelbindungen je nach ihrer Lage im Makromolekül keine oder nur eine geringere Reaktivität bei Funktionalisierungsreaktionen zeigen. Der Ausdruck "Gehalt an Methylidengruppen" bezieht sich auf den prozentualen Anteil von Polyisobutenmolekülen mit Methylidengruppen, bezogen auf die Zahl aller olefinisch ungesättigten Polyisobutenmoleküle in einer Probe. Er kann durch ¹H-NMR- und/oder ¹³C-NMR-Spektroskopie ermittelt werden, wie dem Fachmann geläufig ist. Der Gehalt an Methylidengruppen beträgt vorzugsweise wenigstens 60 Mol-%, besonders bevorzugt wenigstens 75 Mol-%.

Das nach dem erfindungsgemäßen Verfahren erhaltene Polyisobuten weist ein zahlenmittleres Molekulargewicht Mₙ von 400 bis 50000, vorzugsweise 500 bis 10000, insbesondere 600 bis 5000, speziell 700 bis 2500 auf. Die Dispersität D (D = M_{w}/Mₙ; M_{w} = gewichtsmittleres Molekulargewicht, Mₙ = zahlenmittleres Molekulargewicht) beträgt typischerweise weniger als 2,5, vorzugsweise weniger als 2,0 und insbesondere nicht mehr als 1,8.

Als Einsatzstoffe für das erfindungsgemäße Verfahren eignen sich sowohl Isobuten selbst als auch isobutenhaltige C₄-Kohlenwasserstoffströme, beispielsweise C₄-Raffinate, C₄-Schnitte aus der Isobutan-Dehydrierung, C₄-Schnitte aus Steamcrackern, FCC-Crackern (Fluid Catalyst Cracking), die in der Regel weitgehend von darin enthaltenen 1,3-Butadien befreit sind. Erfindungsgemäß geeignete C₄-Kohlenwasserstoffströme enthalten in der Regel weniger als 1000 ppm, vorzugsweise weniger als 200 ppm Butadien. Typischerweise liegt die Konzentration von 1-Buten, cis- und trans-2-Buten in den C₄-Kohlenwasserstoffströmen im Bereich von 40 bis 60 Gew.-%. Die Konzentration an Isobuten liegt typischerweise im Bereich von 20 bis 50 Gew.-%. Die Restmenge an C₄-Kohlenwasserstoffen (bis 40 Gew.-%) sind C₄-Alkane, d. h. n-Butan und Isobutan (Gesamtkonzentration an 1-Buten, cis- und trans-2-Buten). Derartige C₄-Kohlenwasserstoffströme sind bevorzugte Einsatzmaterialien für das erfindungsgemäße Verfahren. Bei Einsatz von C₄-Schnitten als Einsatzmaterial übernehmen die von Isobuten verschiedenen Kohlenwasserstoffe die Rolle eines inerten Verdünnungsmittels.

Aufgrund der hohen Viskosität der Polyisobutene erfolgt die Polymerisation in Gegenwart eines Verdünnungsmittels. Für das erfindungsgemäße Verfahren sind solche Verdünnungsmittel oder Verdünnungsmittelgemische geeignet, die gegenüber den eingesetzten Reagenzien inert sind. Geeignete Verdünnungsmittel sind gesättigte oder ungesättigte aliphatische, cycloaliphatische und aromatische Kohlenwasserstoffe, beispielsweise gesättigte Kohlenwasserstoffe, wie Butan, Pentan, Hexan, Heptan, Oktan z. B. n-Hexan, i-Oktan, Cyclopentan, Cyclohexan, Methylcyclohexan, Toluol oder Ethylbenzol; halogenierte Kohlenwasserstoffe wie Methylchlorid, Dichlormethan oder Trichlormethan sowie Mischungen der vorgenannten Verbindungen. Bevorzugte Verdünnungsmittel sind halogenfreie Kohlenwasserstoffe. Als Verdünnungsmittel kann auch Isobuten selbst verwendet werden, wenn die Polymerisation nur bis zu einem Teilumsatz betrieben wird. Vorzugsweise werden die Verdünnungsmittel vor ihrem Einsatz im erfindungsgemäßen Verfahren von Verunreinigungen wie Wasser, Alkohole, Aldehyde, Ketone, Carbonsäuren, Stickstoffverbindungen oder Mineralsäuren befreit, beispielsweise durch Adsorption an festen Adsorbentien, wie Aktivkohle, Molekularsieben oder Ionenaustauschern.

Als Katalysatoren werden Bortrifluorid-haltige Komplexkatalysatoren eingesetzt. Hierunter versteht man Katalysatoren aus Bortrifluorid und wenigstens einem Cokatalysator, sind in der Regel Verbindungen die ein abstrahierbares Wasserstoffatom aufweisen (protische Cokatalysatoren) und aprötische sauerstoffhaltige Verbindungen, die unter acyclischen Ethern, Ketonen, Aldehyden und Anhydriden von Carbonsäuren ausgewählt sind. Zu den protischen Cokatalysatoren zählen sauerstoffhaltige Verbindungen mit OH-Gruppen wie Wasser, primäre C₁-C₂₀-Alkanole, sekundäre C₃-C₂₀-Alkanole, Phenol, alkylsubstituierte Phenole wie Kresole, aliphatische Carbonsäuren und dergleichen, aber auch Halogenkohlenwasserstoffe, wie Dichlormethan oder Trichlormethan. Bevorzugte protische Cokatalysatoren sind primäre C₁-C₂₀-Alkanole und sekundäre C₃-C₂₀-Alkanole. Zu den aprotischen, sauerstoffhaltigen Verbindungen zählen insbesondere acyclische Ether und cyclische Anhydride aliphatischer Dicarbonsäuren, wobei erstere bevorzugt sind. Bevorzugte Cokatalysatoren sind protische Cokatalysatoren und Mischungen protischer Cokatalysatoren mit aprotischen Cokatalysatoren. Das Molverhältnis von Cokatalysator zu Bortrifluorid liegt typischerweise im Bereich von 0,5 : 1 bis 3,0 : 1, häufig 0,7 : 1 bis 3,0 : 1, insbesondere im Bereich von 0,9 : 1 bis 2,5 : 1 und speziell im Bereich von 1,0 : 1 bis 2,1 :1.

Vorzugsweise umfasst der Cokatalysator wenigstens eine "Starter"-Verbindung L¹, die unter Wasser, primären C₁-C₅-Alkanolen, sekundären C₃-C₅-Alkanolen, Phenol, alkylsubstituierten Phenolen und tertiären Alkylethern ausgewählt ist. Bei den Startern L¹ handelt es typischerweise sich um Verbindungen mit einem abstrahierbaren (aciden bzw. aktiven) Wasserstoffatom ohne wesentliche sterische Hinderung. Die Verbindungen L¹ werden als Starter bezeichnet, weil ihr aktives Wasserstoffatom am Anfang der wachsenden Polyisobutenkette eingebaut wird. Als Starter L¹ eignen sich außerdem tert-Alkylether, wie tert-Butylmethylether, die leicht ein tert-Alkylkation bilden oder Halogenkohlenwasserstoffe, wie Dichlormethan oder Trichlormethan. Als Verbindungen L¹ sind primäreC₁-C₅-Alkanole und sekundäre C₃-C₅-Alkanole, beispielsweise Methanol, Ethanol, 2-Propanol und/oder 1-Propanol, bevorzugt. Davon sind Methanol und Isopropanol am meisten bevorzugt. Als L¹ sind außerdem Mischungen von primären C₁-C₅-Alkanolen und/oder sekundären C₃-C₅-Alkanolen mit einem tert.-Alkylether bevorzugt. Tertiäre Alkylether sind Dialkyletherverbindungen, die eine oder zwei, vorzugsweise eine tertiäre Alkylgruppe, mit vorzugsweise 4 bis 6 C-Atomen, und eine weitere Alkylgruppe mit 1 bis 6 C-Atomen am Ethersauerstoff tragen. Hierunter sind insbesondere Dialkylether bevorzugt, die eine tert.-Butylgruppe oder eine 2-Methylbutan-2-yl-Gruppe am Ethersauerstoffatom tragen. Die andere Alkylgruppe am Ethersauerstoff ist vorzugsweise eine primäre oder sekundäre Alkylgruppe, die in der Regel 1 bis 6 C-Atome und insbesondere 1 bis 3 C-Atome aufweist, z. B. eine Methyl- Ethyl, n-Propyl- oder Isopropylgruppe und insbesondere eine Methylgruppe. Besonders bevorzugter tert.-Alkylether ist tert.-Butylmethylether. Das Molverhältnis von Verbindung L¹ zu Bortrifluorid liegt typischerweise im Bereich von 0,5 : 1 bis 3,0 : 1, insbesondere im Bereich von 0,6 : 1 bis 2,5 : 1 und speziell im Bereich von 0,7 : 1 bis 2,0 : 1.

Neben der Verbindung L¹ können die Cokatalysatoren auch einen Regler umfassen. Als Regler L² können Aldehyde und/oder Ketone mitverwendet werden, die üblicherweise ein bis 20, vorzugsweise 2 bis 10 Kohlenstoffatome umfassen und in denen vorzugsweise andere funktionelle Gruppen als die Carbonylgruppe abwesend sind. Als L² sind beispielsweise Formaldehyd, Acetaldehyd, Propionaldehyd, n-Butyraldehyd, iso-Butyraldehyd, Aceton, Methylethylketon und Diethylketon geeignet. Dabei ist Aceton am meisten bevorzugt. Das Molverhältnis von Regler zu Bortrifluorid liegt in der Regel im Bereich von 0 : 1 bis 0,5 : 1, vorzugsweise im Bereich von 0 : 1 bis 0,3 : 1. In einer bevorzugten Ausführungsform umfassen die Cokatalysatoren keine oder weniger als 10 Mol-%, insbesondere weniger als 5 Mol-% Verbindung L² bezogen auf Bortrifluorid.

Neben der Verbindung L¹ können die Cokatalysatoren auch eine die Löslichkeit des Bortrifluorid-Komplexkatalysators fördernde Substanz, einen sog. Solubilisator L3 umfassen. Die Solubilisatoren L³ haben eine löslichkeitsvermittelnde Wirkung und erhöhen die Löslichkeit des Katalysatorkomplexes im Einsatzmaterial. Es handelt sich um von tert-Alkylethern verschiedene Ether mit wenigstens 5 Kohlenstoffatomen oder langkettige und/oder sterisch gehinderte Alkohole, die eine Abschirmung gegen den Zutritt von Isobutenmolekülen bieten. Man verwendet vorzugsweise Dialkylether mit 5 bis 20 Kohlenstoffatomen, ein sekundäres Alkanol mit 6 bis 20 Kohlenstoffatomen, ein primäres Alkanol mit 6 bis 20 Kohlenstoffatomen und/oder ein tertiäres C₄-C₂₀-Alkanol. Werden löslichkeitsvermittelnde, primäre Alkanole verwendet, weisen diese vorzugsweise eine β-Verzweigung auf, d. h. eine Verzweigung an dem benachbarten Kohlenstoffatom zum Kohlenstoffatom, das die Hydroxylgruppe trägt. Geeignete Vertreter sind beispielsweise unter Di-n-butylether, Di-n-hexylether, Dioctylether, 2-Ethylhexanol, 2-Propylheptanol, den Oxoalkoholen von Di-, Tri- und Tetramerpropylen und Di- und Trimerbuten, linearen 1-Alkoholen (die z. B. durch die Alfol®-Verfahren erhältlich sind), sofern sie unter Reaktionsbedingungen flüssig sind, wie n-Hexanol oder n-Octanol, und tert-Butanol ausgewählt. Davon ist 2-Ethylhexanol am meisten bevorzugt. Das Molverhältnis von BF₃ zur Verbindung L³ liegt typischerweise im Bereich von 0 : 1 bis 1,0 : 1, z. B. im bereich von 0.01: 1, häufig im Bereich von 0,05 : 1 bis 0,5 : 1, insbesondere im Bereich von 0,1 : 1 bis 0,35 : 1. In einer weiteren bevorzugten Ausführungsform umfassen die Cokatalysatoren keine oder weniger als 10 Mol-%, insbesondere weniger als 5 Mol-% Verbindung L³ bezogen auf Bortrifluorid.

Bevorzugte Komplexkatalysatoren lassen sich durch die allgemeine Formel

(BF₃)ₐ(L¹)_{b}(L2)_{c}(L3)_{d}

beschreiben, worin L¹, L² und L³ die zuvor genannten Bedeutungen haben und worin
- das Verhältnis b:a im Bereich von 0,5 bis 3,0, vorzugsweise 0,6 bis 2,5 und insbesondere 0,7 bis 2,0 liegt,
- das Verhältnis c:a im Bereich von 0 bis 0,5, vorzugsweise 0 bis 0,3 und insbesondere bei < 0,1 oder < 0,05 liegt,
- das Verhältnis d:a im Bereich von 0 bis 1,0, z. B. 0,01 bis 1,0, vorzugsweise 0,05 bis 0,5 insbesondere 0,1 bis 0,35, liegt.

Die BF₃-Konzentration im Reaktor liegt in der Regel im Bereich von 0,005 bis 1 Gew.-%, bezogen auf die flüssige Reaktionsphase, insbesondere im Bereich von 0,01 bis 0,5 Gew.-% und speziell im Bereich von 0,02 bis 0,2 Gew.-%.

Die Bortrifluorid-Komplexe können in separaten Reaktoren vor ihrem Einsatz im erfindungsgemäßen Verfahren vorgebildet werden, nach ihrer Bildung zwischengelagert und je nach Bedarf in die Polymerisationsapparatur eindosiert werden.

Eine andere, bevorzugte Variante besteht darin, dass man die Bortrifluorid-Komplexe in situ in der Polymerisationsapparatur oder einem Zulauf erzeugt. Bei dieser Verfahrensweise wird der jeweilige Cokatalysator gegebenenfalls gemeinsam mit einem Lösungsmittel in die Polymerisationsapparatur oder den Zulauf eingespeist und Bortrifluorid in der erforderlichen Menge in dieser Mischung der Reaktanden dispergiert. Hierbei setzen sich das Bortrifluorid und der Cokatalysator zum Bortrifluorid-Komplex um. Anstelle eines zusätzlichen Lösungsmittels kann bei der in situ-Erzeugung des Bortrifluorid-Katalysator-Komplexes die Reaktionsmischung aus nicht umgesetztem Isobuten und Polyisobuten als Lösungsmittel fungieren. In einer weiteren bevorzugten Ausführungsform der in situ-Erzeugung mischt man den Cokatalysator, z. B. die Verbindung L¹ und gegebenenfalls die Verbindungen L² und L³ in den Reaktorzulauf, d. h. in die flüssigen Reaktanden (Isobuten) bzw. in die Mischung aus Isobuten und Verdünnungsmittel ein und gibt die benötigte Menge Bortrifluorid direkt in den Reaktor.

Als cyclischen Ether verwendet man vorzugsweise eine Verbindung der Formel 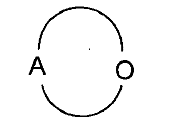 worin A für (CH₂)ₙ steht, wobei n für 2, 3, 4, 5 oder 6, insbesondere für 2, 3 oder 4 steht, eine dem Sauerstoffatom nicht benachbarte CH₂-Gruppe durch ein Sauerstoffatom ersetzt sein kann und wobei 1 oder 2 Wasserstoffatome in (CH₂)ₙ durch zwei Reste R ersetzt sein können, die gleich oder verschieden sein können und die unter C₁-C₆-Alkyl, insbesondere Methyl, oder Phenyl ausgewählt sind.

Besonders bevorzugt verwendet man solche cyclische Ether, die unter den Polymerisationsbedingungen nur langsam zu den entsprechenden Polyethern oligomerisieren oder polymerisieren.

Beispiele für geeignete cyclische Ether sind Oxirane wie Ethenoxid, Propenoxid, 1-Butenoxid, 2-Butenoxid, Isobutenoxid, Diisobutenoxid (Epoxid des Isobutendimers, überwiegend das Oxiran des 2,4,4-Trimethylpenten-1), Triisobutenoxid (Epoxid des Isobutentrimers, überwiegend das Oxiran von 2,4,4,6,6-Pentamethylhepten-1), Styroloxid, α-Methylstyroloxid, Tetrahydrofuran, Pyran, 1,3-Dioxolan und Dioxan, wobei 1-Butenoxid, 2-Butenoxid, Isobutenoxid, Diisobutenoxid, Triisobutenoxid und Tetrahydrofuran besonders bevorzugt sind.

Es kann ein cyclischer Ether alleine oder ein Gemisch von zwei oder mehreren zur Anwendung kommen.

Im Allgemeinen setzt man den cyclischen Ether in einer Menge von 1 bis 30 Mol-%, vorzugsweise 2 bis 20 Mol-% und insbesondere 5 bis 15 Mol-%, bezogen auf BF₃ ein.

Der cyclische Ether kann vor oder nach dem Katalysator oder zusammen mit dem Katalysator zu dem Reaktionsgemisch gegeben werden oder zusammen mit den Cokatalysatoren dem Reaktor zugeführt werden.

Die Polymerisation von Isobuten erfolgt vorzugsweise in einem kontinuierlichen Verfahren. Maßnahmen zur kontinuierlichen Polymerisation von Isobuten in Gegenwart Bortrifluoridhaltiger Katalysatoren in inerten organischen Lösungsmitteln zu Polyisobuten sind an sich bekannt. Bei einem kontinuierlichen Verfahren wird kontinuierlich ein Teil der im Polymerisationsreaktor entstandenen Reaktionsmischung ausgetragen. Eine dem Austrag entsprechende Menge an Einsatzmaterialien wird dem Polymerisationsreaktor kontinuierlich zugeführt (Zulaufmenge) und mit dem im Reaktor befindlichen Stoffgemisch (bei einem Umlaufverfahren die sog. Umlaufmenge bzw. der Umlauf) vermischt. Das Verhältnis von Umlaufmenge zur Zulaufmenge liegt in der Regel im Bereich von 1000 : 1 bis 1 : 1, bevorzugt im Bereich von 500 : 1 bis 5 : 1 und insbesondere im Bereich von 20 : 1 bis 100 : 1 v/v. Die mittlere Verweildauer des zu polymerisierenden Isobutens im Polymerisationsreaktor, die durch Reaktionsvolumen und Zulaufmenge bestimmt wird, kann 5 Sekunden bis mehrere Stunden betragen. Verweilzeiten von 1 bis 30 min, insbesondere 2 bis 20 min sind bevorzugt.

Die Polymerisation erfolgt im Allgemeinen bei einer Temperatur im Bereich von -60°C bis +40 °C, vorzugsweise weniger als 0 °C, besonders bevorzugt im Bereich von -5 °C bis -40 °C und speziell im Bereich von -10°C bis -30 °C. Die Polymerisationswärme wird entsprechend mit Hilfe einer Kühlvorrichtung abgeführt. Diese kann beispielsweise mit flüssigem Ammoniak als Kühlmittel betrieben werden. Eine andere Möglichkeit, die Polymerisationswärme abzuleiten, ist die Siedekühlung. Dabei wird die freiwerdende Wärme durch Verdampfen des Isobutens und/oder anderer leichtflüchtiger Bestandteile des Isobuten-Feedstocks oder des gegebenenfalls leichtflüchtigen Lösungsmittels abgeführt.

Die Polymerisation des Isobutens erfolgt in den für die kontinuierliche Polymerisation üblichen Reaktoren, wie Rührkesseln, Rohr-, Rohrbündel- und Schlaufenreaktoren, wobei Schlaufenreaktoren, d. h. Rohr(bündel)reaktoren mit Umlauf und turbulenter Strömung, oder Reaktoren mit Einbauten wie statischen Mischern, d. h. Reaktoren mit lokaler Rührkesselcharakteristik mit den Eigenschaften einer Pfropfenströmung, bevorzugt sind. Besonders günstig sind bei niedrigviskosen Reaktionsgemischen Schlaufenreaktoren mit Rohrquerschnitten bis zu 25 mm, die zu turbulenter Strömung führen; bei hochviskosen Reaktionsgemischen sind größere Rohrquerschnitte mit statischen Mischelementen und niedrigen Strömungsgeschwindigkeiten bevorzugt.

In bevorzugten Ausführungsformen führt man die Polymerisation in wenigstens zwei aufeinanderfolgenden Reaktoren durch, wovon zumindest der erste Reaktor auf Zulaufeinspeisung rückvermischt ist.

Im ersten Reaktor wird das zugeführte Isobuten im Allgemeinen bis zu einem Teilumsatz von bis zu 95 %, vorzugsweise 50 bis 90 %, besonders bevorzugt 70 bis 90 %, bezogen auf das in den ersten Reaktor eingeführte Isobuten, polymerisiert. Der Austrag aus dem ersten Reaktor wird vorzugsweise ohne weitere Aufarbeitung in den zweiten Reaktor bzw. aus einem vorhergehenden Reaktor in den nachfolgenden Reaktor geleitet. Hier erfolgt die weitere Polymerisation ohne Zusatz frischen Isobutens.

Die Verweilzeit des Reaktionsgemisches im ersten Reaktor beträgt bei der Einstellung eines Isobutenumsatzes von 50 bis 90 % üblicherweise 5 bis 60 Minuten, kann aber auch kürzer oder länger sein, je nachdem, ob ein sehr aktiver oder weniger aktiver Katalysator verwendet wird. Im zweiten Reaktor wird im Allgemeinen eine Verweilzeit von 1 bis 180, vorzugsweise von 2 bis 120 Minuten eingestellt. Im Allgemeinen wird im letzten Reaktor der Isobutenumsatz so eingestellt, dass der Gesamtumsatz des Isobutens bei 90 bis 99,5 % liegt.

Die Konzentration des Isobutens in der flüssigen Reaktionsphase im Reaktor liegt in der Regel im Bereich von 0,2 bis 50 Gew.-%, vorzugsweise im Bereich von 0,5 bis 20 Gew.-% und insbesondere im Bereich von 1 bis 10 Gew.-%, bezogen auf die flüssige Reaktionsphase. Bei der Herstellung von Polyisobutenen mit zahlenmittleren Molekulargewichten Mₙ im Bereich von 500 bis 5000 arbeitet man vorzugsweise bei einer Isobutenkonzentration im Bereich von 1 bis 20 Gew.-% und insbesondere im Bereich von 1,5 bis 10 Gew.-%. Bei der Herstellung von Polyisobutenen mit einem zahlenmittleren Molekulargewicht Mₙ von mehr als 5000 arbeitet man bevorzugt bei einer Isobutenkonzentration im Bereich von 4 bis 50 Gew.-%. In bevorzugten Ausführungsformen wird im ersten Reaktor (Hauptreaktor) eine Isobutenkonzentration von 3 Gew.-% nicht unterschritten.

Beim Verlassen des letzten Reaktors enthält das Reaktionsgemisch üblicherweise 2 Gew.-% oder weniger Isobuten. Vorzugsweise wird eine Isobutenkonzentration von 0,2 Gew.-% und insbesondere 0,5 Gew.-% nicht unterschritten, da niedrigere Konzentrationen den Einbau von 1-Buten begünstigen würden.

Vorzugsweise arbeitet man im erfindungsgemäßen Polymerisationsverfahren zumindest im Hauptreaktor unter isothermen Bedingungen, d. h. die Temperatur der flüssigen Reaktionsmischung im Polymerisationsreaktor hat einen stationären Wert und ändert sich während des Betriebs des Reaktors nicht oder nur in geringem Maße. Falls gewünscht, kann die Polymerisation im zweiten Reaktor bei einer tieferen Polymerisationstemperatur als im ersten Reaktor erfolgen. Es bedarf dann in der Regel einer weiteren Aktivierung durch Zusatz von frischem Bortrifluorid oder eines Cokatalysators mit aktivierenden Eigenschaften, wie einem Aldehyd oder Keton, z. B. Aceton, oder Methanol. Bei einer Polymerisation in mehreren Reaktoren ist es bevorzugt, den zweiten oder weiteren Reaktor bei geringfügig höherer Temperatur zu betreiben, um den Isobutenumsatz durch thermische Aktivierung zu vervollständigen. Da die Polymerisation exotherm verläuft, kann man hierzu den zweiten oder weiteren Reaktor unter im Wesentlichen adiabatischen Bedingungen betreiben, d. h. der Reaktor wird nicht aktiv gekühlt oder geheizt und die Polymerisationswärme wird vom Reaktionsgemisch aufgenommen. Hierbei hat es sich als günstig erwiesen, einen Teil des Komplexkatalysators durch Zugabe von Stickstoffdonoren wie Nitrilen, z. B. Acetonitril, Cyaniden wie HCN, oder durch Protonenfallen wie Pyridinen oder Aminen zu deaktivieren. Hierdurch erreicht man besonders enge Molekulargewichtsverteilungen.

Die aus dem Polymerisationsreaktor ausgetragene Reaktionsmischung enthält noch aktiven Katalysator. Hierdurch kann sich das im Polymerisationsreaktor gebildete Polyisobuten nachteilig hinsichtlich Molekulargewicht, Molekulargewichtsverteilung und Endgruppengehalt verändern. Um eine weitere Reaktion zu verhindern, wird daher üblicherweise die Polymerisation durch Deaktivierung des Katalysators abgebrochen. Die Deaktivierung kann beispielsweise durch Zugabe von Wasser, Alkoholen, Acetonitril, Ammoniak oder wässrigen Lösungen von Mineralbasen oder durch Einleiten des Austrags in eines der vorgenannten Medien bewirkt werden. Bevorzugt ist die Deaktivierung mit Wasser, die vorzugsweise bei Temperaturen im Bereich von 1 bis 60 °C (Wassertemperatur) durchgeführt wird. Bei tieferen Temperaturen empfiehlt sich ein Abbruch durch Zusatz von Acetonitril; der deaktivierte Austrag kann zweckmäßigerweise zur Vorkühlung des Zulaufs verwendet werden, z. B. in einem Gegenstromwärmetauscher.

Die Bortrifluorid-Komplex-Katalysatoren können auch aus dem Austrag weitgehend abgetrennt und in die Polymerisationsreaktion zurückgeführt werden. Die Abtrennung und Rückführung des Katalysators aus dem Austrag der Polymerisationsreaktion ist aus der WO 99/31151 bekannt, auf die in vollem Umfang Bezug genommen wird. Zur Abtrennung des Katalysators aus dem Austrag verwendet man bevorzugt begrenzt lösliche Bortrifluorid-Komplex-Katalysatoren und/oder kühlt das Reaktionsgemisch auf Temperaturen von beispielsweise 5 bis 30°C unterhalb Reaktortemperatur, vorzugsweise 10 bis 20°C unterhalb Reaktortemperatur ab. Bei der Abtrennung des Katalysators aus dem Reaktoraustrag empfiehlt es sich, zuvor die Isobutenkonzentration im Austrag auf Werte unterhalb 2 Gew.-%, vorzugsweise 1 Gew.-% und insbesondere unterhalb 0,5 Gew.-%, bezogen auf den Austrag, abzusenken.

Der Katalysator fällt in Form feinverteilter Tröpfchen an, die in der Regel rasch in eine kohärente Phase übergehen. Die Komplextröpfchen bzw. die kohärente Phase haben eine deutlich höhere Dichte als die Polymerlösung. Sie können daher in der Regel mit Hilfe von Abscheidern (Separatoren) oder sonstigen Sammelbehältern von der polymerreichen, katalysatorarmen Produktphase abgetrennt werden. Die dabei abgetrennte polymerreiche Produktphase ist im Allgemeinen homogen und enthält nur noch geringe Mengen löslicher Katalysatoranteile. Diese werden in der zuvor beschriebenen Weise, vorzugsweise mit Wasser, Acetonitril oder Acetonitril/Wasser-Mischungen davon, deaktiviert.

Der Fluorgehalt des nach beendeter Polymerisation erhaltenen Reaktionsgemisches beträgt < 30 ppm, vorzugsweise < 20 ppm und insbesondere < 10 ppm. Eine spezielle Behandlung des Reaktionsgemisches zur Verringerung des Fluorgehaltes ist daher im Allgemeinen nicht mehr erforderlich. Gewünschtenfalls kann man das Reaktionsgemisch oder das Polymer einer Behandlung mit einem anorganischen Adsorptionsmittel unterziehen, um den Fluorgehalt weiter zu verringern. Das anorganische Adsorptionsmittel weist bevorzugt eine hohe spezifische Oberfläche auf. Es umfasst in der Regel Oxide von Si, Al, Zr und/oder Ti; es ist vorzugsweise unter Aluminiumoxid, Zeolithen und Kombinationen davon ausgewählt, insbesondere solche mit hoher spezifischer Oberfläche. Das Reaktionsgemisch kann vor der Adsorptionsmittel-Behandlung verschiedenen anderen Behandlungen, z. B. einer Wäsche zur Katalysatordeaktivierung/-entfernung und/oder Entfernung flüchtiger Komponenten, unterzogen werden.

Zum Inkontaktbringen des Reaktionsgemisches mit dem Adsorptionsmittel sind alle denkbaren diskontinuierlichen und kontinuierlichen Verfahren geeignet. So kann man das Polyisobuten portionsweise mit dem Adsorptionsmittel versetzen, vorzugsweise unter mechanischer Bewegung, und nach ausreichender Verweilzeit abtrennen, z. B. durch Filtration, Abdekantieren oder ein sonstiges geeignetes Verfahren. Zweckmäßigerweise liegt das Adsorptionsmittel in einer Festbettschüttung vor, die in einer Adsorptionssäule angeordnet ist, durch die der Reaktionsaustrag geleitet wird. Die Adsorptionssäule ist vorzugsweise vertikal angeordnet und wird vom Stoffstrom in Richtung der Schwerkraft oder vorzugsweise entgegen der Schwerkraft durchströmt. Es können auch mehrere hintereinandergeschaltete Adsorptionssäulen verwendet werden.

Die Behandlung mit dem Adsorptionsmittel erfolgt im Allgemeinen bei einer Temperatur von 5 bis 100 °C, vorzugsweise 40 bis 95 °C, wenn das Adsorptionsmittel oder die Adsorptionsmittelkombination wenigstens einen Zeolith umfasst. Die Behandlung erfolgt vorzugsweise bei einer Temperatur von 130 bis 240 °C, insbesondere 150 bis 230 °C, wenn das Adsorptionsmittel oder die Adsorptionsmittelkombination keinen Zeolith umfasst, und z. B. Aluminiumoxid als alleiniges Adsorptionsmittel verwendet wird. Die Verweilzeit, d. h. die Zeit, während der sich das Reaktionsgemisch im Kontakt mit dem Adsorptionsmittel befindet, beträgt vorzugsweise 10 bis 100 min.

Zur Aufarbeitung werden aus dem Reaktionsgemisch das Verdünnungsmittel und gegebenenfalls das nicht umgesetzte Isobuten abgetrennt, in der Regel durch Abdestillieren unter Atmosphärendruck und/oder unter Vakuum. Das abdestillierte Verdünnungsmittel kann in den Polymerisationsreaktor zurückgeführt werden, vorzugsweise ohne weitere Behandlung. Wird als Isobutenquelle für das erfindungsgemäße Verfahren ein C₄-Kohlenwasserstoffstrom verwendet, wird der Isobuten-abgereicherte Strom vorzugsweise nicht zurückgeführt, sondern einer Weiterverwendung, z. B. einer Hydroformylierung der darin enthaltenen linearen Butene zu Valeraldehyd, zugeführt.

Nach Abtrennung des Verdünnungsmittels wird der Rückstand, der das gewünschte Polyisobuten enthält, in üblicher Weise weiter aufgearbeitet. Flüchtige Oligomere des Isobutens werden zusammen mit Verdünnungsmittelresten nach üblichen Methoden destillativ entfernt, z. B. bei Temperaturen bis 230 °C im Vakuum. Es eignen sich Umlaufverdampfer, Fallfilmverdampfer, Dünnschichtverdampfer, Sambay-Verdampfer, Ringspaltverdampfer und dergleichen.

Das erfindungsgemäße Verfahren erlaubt die Herstellung von Polyisobuten mit einem Fluorgehalt, der im Vergleich zur Herstellung ohne cyclischen Ether erheblich reduziert ist. Darüber hinaus ist bereits der Fluorgehalt des nach der Polymerisation erhaltenen Reaktionsgemisches stark reduziert. Bei der Aufarbeitung des Reaktionsgemisches ist daher die Gefahr der Bildung von Fluorwasserstoff und damit auch die Korrosionsgefahr außerordentlich gering, so dass auf die Verwendung von teuren korrosionsbeständigen Apparaturen aus stark nickelhaltigen Edelstählen verzichtet werden kann. Zudem weisen die erfindungsgemäß erhaltenen Polyisobutene eine hohe molekulare Einheitlichkeit und einen hohen Gehalt an olefinischen Endgruppen auf. Die Bildung von Polymeren mit Hydroxylgruppen wurde nicht beobachtet.

Die Erfindung wird durch die folgenden Beispiele näher veranschaulicht.

### Beispiel 1

2 Mol Isobuten und 200 ml Hexan wurden über einem Molekularsieb von 3Å getrocknet und in einem 11-Polymerisationskolben mit Trockeneisrückflusskühler und Magnetstäbchen vorgelegt und unter Rühren auf einem Magnetrührer mit Aceton/Trockeneis auf -20°C gekühlt. Dann wurden nacheinander 1,25 mMol 1-Butenoxid und ein vorgefertigter BF₃-Isopropanol-Komplex aus 12,5 mmol BF₃ und 17,86 mMol Isopropanol zugesetzt. Die Temperatur des Reaktionsgemisches erhöhte sich um 5 °C. Nach 15 min wurde die Polymerisation mit 300 ml Wasser abgebrochen und das Reaktionsgemisch wurde in einen Scheidetrichter gegeben. Die wässrige Phase wurde abgetrennt und die organische Phase wurde über Na₂SO₄ filtriert. Der Fluorgehalt der organischen Phase wurde mittels ¹⁹F-NMR-Spektroskopie bestimmt. Es waren keine Signale mehr erkennbar, so dass der Fluorgehalt < 1 ppm war. Nach Abdestillieren des Lösungsmittels und Entgasung bei 210°C (15 min, 2 mbar) erhielt man ein Polyisobuten mit einem Molekulargewicht Mₙ von 1300, einer Dispersität D von 1,8 und einem Vinylidengehalt von 82 %.

### Beispiel 2

Es wurde das in Beispiel 1 beschriebene Verfahren wiederholt, wobei jedoch an Stelle von 1-Butenoxid die gleiche Menge Isobutenoxid verwendet wurde. Der Fluorgehalt der organischen Phase (Rohaustrag) und des Polyisobutens sind in der nachfolgenden Tabelle 1 angegeben.

### Beispiel 3

Es wurde das in Beispiel 1 beschriebene Verfahren wiederholt, wobei jedoch an Stelle von 1-Butenoxid die gleiche Menge Propenoxid verwendet wurde. Der Fluorgehalt der organischen Phase (Rohaustrag) und des Polyisobutens sind in der nachfolgenden Tabelle 1 angegeben.

### Vergleichsbeispiel 1

Es wurde das in Beispiel 1 beschriebene Verfahren jedoch ohne Zusatz eines cyclischen Ethers wiederholt. Der Fluorgehalt von Rohaustrag und erhaltenem Polyisobuten ist in der nachfolgenden Tabelle 1 angegeben.

### Beispiel 4

Es wurde das in Beispiel 1 beschriebene Verfahren wiederholt, wobei jedoch an Stelle von Isobuten/Hexan 400 ml Raffinat I mit 45 % Isobuten als Einsatzmaterial verwendet wurden. Um die Polymerisation abzubrechen, wurden zusätzlich 300 ml Hexan zugesetzt. Der Fluorgehalt des erhaltenen Polyisobutens ist in der nachfolgenden Tabelle 1 angegeben.

### Beispiel 5

Es wurde das in Beispiel 4 beschriebene Verfahren wiederholt, wobei jedoch an Stelle von 1-Butenoxid die halbe Menge 2-Butenoxid eingesetzt wurde. Der Fluorgehalt des erhaltenen Polyisobutens ist in der nachfolgenden Tabelle 1 angegeben.

### Vergieichsbeispiet 2

Es wurde das im Beispiel 4 beschriebene Verfahren jedoch ohne Zusatz eines cyclischen Ethers wiederholt. Der Fluorgehalt des erhaltenen Polyisobutens ist in der nachfolgenden Tabelle 1 angegeben.

**Tabelle 1: Fluorgehalt von Rohaustrag und Polyisobuten**

| | Fluorgehalt (ppm) | |
|---|---|---|
| | Rohaustrag | Polyisobuten |
| Beispiel 1 | <1 | <1 |
| Beispiel 2 | 5 | <1 |
| Beispiel 3 | 6 | <1 |
| Vergleichsbeispiel 1 | 140 | <1 |
| Beispiel 4 | - | 30 |
| Beispiel 5 | - | 19 |
| Vergleichsbeispiel 2 | - | 42 |

## Patentansprüche

1. Verfahren zur Herstellung von Polyisobuten mit einem zahlenmittleren Molekulargewicht Mₙ von 400 bis 50000 durch Polymerisation von Isobuten in Anwesenheit eines BF₃-haltigen Komplex-Katalysators, der Bortrifluorid und wenigstens einen Cokatalysator umfasst, welcher unter sauerstoffhaltige Verbindungen mit OH-Gruppen, acyclischen Ethern, Ketonen, Aldehyden und Anhydriden von Carbonsäuren ausgewählt ist, wobei man die Polymerisation zumindest zeitweise in Anwesenheit eines cyclischen Ethers durchführt.

2. Verfahren nach Anspruch 1, wobei der cyclische Ether ausgewählt ist unter den Verbindungen der Formel 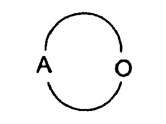 worin A für (CH₂)ₙ steht, wobei n für 2, 3, 4, 5 oder 6 steht, eine dem Sauerstoffatom nicht benachbarte CH₂-Gruppe durch ein Sauerstoffatom ersetzt sein kann und wobei 1 oder 2 Wasserstoffatome in (CH₂)ₙ durch zwei Reste R ersetzt sein können, die gleich oder verschieden sein können und die unter C₁-C₆-Alkyl oder Phenyl ausgewählt sind.

3. Verfahren nach Anspruch 1, wobei der cyclische Ether ausgewählt ist unter Propenoxid, 1-Butenoxid, 2-Butenoxid, Isobutenoxid, Diisobutenoxid, Triisobutenoxid und Tetrahydrofuran.

4. Verfahren nach einem der vorhergehenden Ansprüche, wobei man den cyclischen Ether in einer Menge von 1 bis 30 Mol-%, bezogen auf BF₃, verwendet.

5. Verfahren nach einem der vorhergehenden Ansprüche, wobei der BF₃-haltige Komplex-Katalysator wenigstens eine sauerstoffhaltige organische Verbindung umfasst.

6. Verfahren nach Anspruch 5, wobei das Molverhältnis von BF₃ zu der sauerstoffhaltigen Verbindung im Bereich von 0,5 bis 3,0 liegt.

7. Verfahren nach einem der vorhergehenden Ansprüche, wobei der BF₃-haltige Katalysator ein primäres C₁-C₅-Alkanol oder sekundäres C₃-C₅-Alkanol umfasst.

8. Verfahren nach Anspruch 7, wobei das Molverhältnis von BF₃ zu Alkanol im Bereich von 0,5 bis 3,0 liegt.

9. Verfahren nach einem der Ansprüche 5 bis 7, wobei der BF₃-haltige Katalysator einen tertiären Alkylether umfasst.

10. Verfahren nach Anspruch 9, wobei das Molverhältnis von BF₃ zu der Gesamtmenge an tertiären Alkylether und C₁-C₅-Alkanol im Bereich von 0,5 bis 3,0 liegt.

11. Verfahren nach einem der vorhergehenden Ansprüche, wobei man als isobutenhaltigen Einsatzstoff einen isobutenhaltigen C₄-Kohlenwasserstoffstrom verwendet, der 20 bis 50 Gew.-% Isobuten, 40 bis 60 Gew.-% 1-Buten, cis- und trans-2-Buten sowie Isobutan und/oder n-Butan (Raffinat I) enthält.

## Claims

1. A process for preparing polyisobutene having a number-average molecular weight Mₙ of from 400 to 50 000 by polymerizing isobutene in the presence of a BF₃-containing complex catalyst which comprises boron trifluoride and at least one cocatalyst which is selected from oxygen compounds with OH groups, acyclic ethers, ketones, aldehydes and anhydrides of carboxylic acids, wherein the polymerization is carried out at least temporarily in the presence of a cyclic ether.

2. The process according to claim 1, wherein the cyclic ether is selected from the compounds of the formula 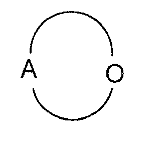 in which A is (CH₂)ₙ where n is 2, 3, 4, 5 or 6, one CH₂ group nonadjacent to the oxygen atom may be replaced by an oxygen atom and where 1 or 2 hydrogen atoms in (CH₂)ₙ may be replaced by two R radicals which may be the same or different and are selected from C₁-C₆-alkyl or phenyl.

3. The process according to claim 1, wherein the cyclic ether is selected from propene oxide, 1-butene oxide, 2-butene oxide, isobutene oxide, diisobutene oxide, triisobutene oxide and tetrahydrofuran.

4. The process according to any of the preceding claims, wherein the cyclic ether is used in an amount of from 1 to 30 mol% based on BF₃.

5. The process according to any of the preceding claims, wherein the BF₃-containing complex catalyst comprises at least one oxygen-containing organic compound.

6. The process according to claim 5, wherein the molar ratio of BF₃ to the oxygen-containing compound is in the range from 0.5 to 3.0.

7. The process according to any of the preceding claims, wherein the BF₃-containing catalyst comprises a primary C₁-C₅-alkanol or secondary C₃-C₅-alkanol.

8. The process according to claim 7, wherein the molar ratio of BF₃ to alkanol is in the range from 0.5 to 3.0.

9. The process according to any of claims 5 to 7, wherein the BF₃-containing catalyst comprises a tertiary alkyl ether.

10. The process according to claim 9, wherein the molar ratio of BF₃ to the total amount of tertiary alkyl ether and C₁-C₅-alkanol is in the range from 0.5 to 3.0.

11. The process according to any of the preceding claims, wherein the isobutenic feedstock used is an isobutenic C₄-hydrocarbon stream which comprises from 20 to 50% by weight of isobutene, from 40 to 60% by weight of 1-butene, cis- and trans-2-butene, and also isobutene and/or n-butane (raffinate I).

## Revendications

1. Procédé de préparation de polyisobutène présentant un poids moléculaire numérique moyen Mₙ de 400 à 50 000 par polymérisation d'isobutène en présence d'un catalyseur complexe contenant du BF₃, qui comprend du trifluorure de bore et au moins un cocatalyseur, qui est choisi parmi les composés contenant de l'oxygène avec des groupes OH, les éthers acycliques, les cétones, les aldéhydes et les anhydrides d'acides carboxyliques, la polymérisation étant réalisée au moins temporairement en présence d'un éther cyclique.

2. Procédé selon la revendication 1, dans lequel l'éther cyclique est choisi parmi les composés de formule 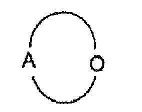 où A représente (CH₂)ₙ, n vaut 2, 3, 4, 5 ou 6, un groupe CH₂ non adjacent à l'atome d'oxygène peut être remplacé par un atome d'oxygène et 1 ou 2 atomes d'hydrogène dans (CH₂)ₙ peuvent être remplacés par deux radicaux R, qui peuvent être identiques ou différents et qui sont choisis parmi C₁-C₆-alkyle ou phényle.

3. Procédé selon la revendication 1, dans lequel l'éther cyclique est choisi parmi l'oxyde de propylène, l'oxyde de 1-butène, l'oxyde de 2-butène, l'oxyde d'isobutène, l'oxyde de diisobutène, l'oxyde de triisobutène et le tétrahydrofuranne.

4. Procédé selon l'une quelconque des revendications précédentes, dans lequel on utilise l'éther cyclique en une quantité de 1 à 30% en mole, par rapport au BF₃.

5. Procédé selon l'une quelconque des revendications précédentes, dans lequel le catalyseur complexe contenant du BF₃ comprend au moins un composé organique contenant de l'oxygène.

6. Procédé selon la revendication 5, dans lequel le rapport molaire de BF₃ à composé contenant de l'oxygène se situe dans la plage de 0,5 à 3,0.

7. Procédé selon l'une quelconque des revendications précédentes, dans lequel le catalyseur contenant du BF₃ comprend un C₁-C₅-alcanol primaire ou un C₃-C₅-alcanol secondaire.

8. Procédé selon la revendication 7, dans lequel le rapport molaire de BF₃ à alcanol se situe dans la plage de 0,5 à 3,0.

9. Procédé selon l'une quelconque des revendications 5 à 7, dans lequel le catalyseur contenant du BF₃ comprend un alkyléther tertiaire.

10. Procédé selon la revendication 9, dans lequel le rapport molaire de BF₃ à la quantité totale d'alkyléther tertiaire et de C₁-C₅-alcanol se situe dans la plage de 0,5 à 3,0.

11. Procédé selon l'une quelconque des revendications précédentes, dans lequel on utilise comme substance de départ contenant de l'isobutène un flux d'hydrocarbures en C₄ contenant de l'isobutène, qui contient 20 à 50% en poids d'isobutène, 40 à 60% en poids de 1-butène, de cis-2-butène et de trans-2-butène ainsi que de l'isobutane et/ou du n-butane (Raffinat I).
